(19) **Europäisches Patentamt / European Patent Office / Office européen des brevets**

(11) **EP 2 010 425 B1**

(12) **EUROPÄISCHE PATENTSCHRIFT**

(45) Veröffentlichungstag und Bekanntmachung des Hinweises auf die Patenterteilung:
**28.07.2010 Patentblatt 2010/30**

(21) Anmeldenummer: **07727311.8**

(22) Anmeldetag: **23.03.2007**

(51) Int Cl.:
**B62D 1/28** *(2006.01)*    **B62D 15/02** *(2006.01)*
**B60W 30/12** *(2006.01)*    **G05D 1/02** *(2006.01)*
**B60W 10/20** *(2006.01)*

(86) Internationale Anmeldenummer:
**PCT/EP2007/052837**

(87) Internationale Veröffentlichungsnummer:
**WO 2007/122054 (01.11.2007 Gazette 2007/44)**

(54) **FAHRERASSISTENZSYSTEM**

DRIVER ASSISTANCE SYSTEM

SYSTÈME D'ASSISTANCE DE CONDUCTEUR

(84) Benannte Vertragsstaaten:
**DE FR GB SE**

(30) Priorität: **18.04.2006 DE 102006017929**

(43) Veröffentlichungstag der Anmeldung:
**07.01.2009 Patentblatt 2009/02**

(73) Patentinhaber: **Robert Bosch GmbH**
**70442 Stuttgart (DE)**

(72) Erfinder:
• **SCHERL, Michael**
**74321 Bietigheim (DE)**

• **WEILKES, Michael**
**31199 Diekholzen (DE)**
• **BUERKLE, Lutz**
**71229 Leonberg (DE)**
• **RENTSCHLER, Tobias**
**75180 Pforzheim (DE)**

(56) Entgegenhaltungen:
**EP-A- 1 538 019    EP-A- 1 547 887**
**WO-A-2006/037445    US-A- 5 765 116**

EP 2 010 425 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Stand der Technik

Die Erfindung betrifft ein Fahrerassistenzsystem gemäß dem Oberbegriff des Patentanspruchs 1.

Aus dem Stand der Technik sind Fahrerassistenzsysteme bekannt, die den Fahrer eines Kraftfahrzeugs bei der Einhaltung der gewählten Fahrspur unterstützen. Ein solches Fahrerassistenzsystem umfasst in der Regel Teilsysteme, die in der Fachsprache als LKS-System (LKS = Lane Keeping Support) und LDW-System (LDW = Lane Departure Warning) bezeichnet werden. Bekannte LKS-Systeme umfassen ein Fahrspurerkennungssystem, wie zum Beispiel ein Videosystem, mit dem die Krümmung der Fahrspur und die relative Position des Fahrzeugs in der Fahrspur (die so genannte Ablage und Orientierung) bestimmt werden können. Wenn der von dem Fahrer gewählte Lenkwinkel von dem durch den Fahrspurverlauf vorgegebenen Soll-Lenkwinkel zu stark abweicht, werden mit Hilfe eines Lenkstellers, wie zum Beispiel eines Servomotors, künstliche Lenkkräfte auf die Lenkung des Fahrzeugs ausgeübt. Diese Lenkkräfte sind so stark, dass sie von dem Fahrer haptisch erfasst werden können. Die Lenkkräfte weisen den Fahrer darauf hin, wie er die Lenkung betätigen müsste, um das Fahrzeug in seiner Fahrspur zu halten.

Das Fahrspurerkennungssystem kann beispielsweise als Videosystem realisiert sein, dessen Videosignale von einer Signalverarbeitungssoftware verarbeiter werden, die die gewünschten geometrischen Daten (Ablage, Orientierung, Fahrspurkrümmung) liefert. Andere Fahrspurerkennungssysteme umfassen zum Beispiel einen Magnetsensor, der die Fahrzeugposition in Verbindung mit in der Fahrbahn integrieren Magneten bestimmt, oder wahlweise auch Radarsensoren. Aus den geometrischen Ablagedaten und einer Information über die Fahrspurkrümmung wird dann mittels eines mathematischen Referenzmodells (Algorithmus) ein Referenz-Lenkwinkel berechnet, der an der Lenkung eingeschlagen werden müsste, um das Fahrzeug optimal in seiner Fahrspur zu halten. Bei einer Abweichung des Fahrer-Lenkwinkels von dem Referenzwinkel wird dann mit Hilfe eines Lenkstellers ein Unterstützungsmoment auf die Lenkung aufgebracht. Das Unterstützungsmoment wird dabei anhand einer vorgegebenen Kennlinie berechnet, die einen funktionellen Zusammenhang zwischen dem Unterstützungsmoment und der Lenkwinkel-Differenz darstellt.

Hierzu wird auch auf die Druckschriften Naab, Reichhart: "Driver Assistance Systems for Lateral and Longitudinal Vehicle Guidance-Heading Control and Active Cruise Support" AVEC 94, und Shimakage, Kawazoe, Sadano, Murakami: "Design of Lane-Keeping Control with Steering Torque Input for a Lene-Keeping Support System", SAE Technical Papers 2001-01-0480, verwiesen.

Bekannte LKS-Systeme sind bisher nicht in der Lage, das Fahrzeug automatisch in seiner Fahrspur zu halten, sondern haben lediglich die Aufgabe, den Fahrer bei einer Abweichung seiner Lenkaktivität von der durch den Fahrspurverlauf vorgegebenen Soll-Lenkbewegung durch gerichtete, künstliche Lenkradkräfte zu unterstützen. Der Fahrer muss also nach wie vor aktiv lenken.

Aus DE 10 2004 055 064.6 ist eine Vorrichtung zum Halten eines Fahrzeugs in seiner Fahrspur, umfassend einen Lenksteller, mit dem ein Lenkmoment auf die Lenkung des Fahrzeugs ausgeübt werden kann, ein Fahrspurerkennungssystem, mit dem die relative Position des Fahrzeugs bezüglich seiner Fahrspur sowie eine den Fahrbahnverlauf betreffende Information ermittelt werden kann, und ein Referenzmodell, das in Abhängigkeit von den vom Fahrspurerkcnnungssystem erhaltenen Daten eine Sollgröße berechnet, bekannt. Die Vorrichtung umfasst einen geschlossenen Regelkreis zur Lenkwinkelregelung, der ein Übertragungsglied und den Lenksteller als Stellglied der Regelung aufweist, wobei das Übertragungsglied ein Regelverhalten aufweist, mit dem eine Regelabweichung der Regelgröße stabil ausgeregelt werden kann. Dabei ist das Übertragunsglied insbesondere eine Kennlinie, die insbesondere einen linearen Abschnitt aufweist. Diese Vorrichtung ist in der Lage, ein Fahrzeug selbsttätig in einer vorgegebenen Fahrspur zu halten, ohne der Fahrer hierzu die Lenkung aktiv betätigen muss.

Die gattungsbildende EP 1 538 019 A offenbart eine Automobil-Spur-Abweichungspräventions(LDP)-Vorrichtung, die eine Steuereinheit umfasst, die detektiert, ob ein betrachtetes Fahrzeug in einem bestimmten Zustand ist, wobei das betrachtete Fahrzeug auf Straßen-Unebenheiten fährt, die sich an oder in der Nähe einer Spurmarkierungslinie befinden.

Die WO 2006/037445 A offenbart ein Verfahren zur Fahrerwarnung und/oder zum aktiven Eingreifen in die Fahrdynamik, falls ein Verlassen der Fahrspur droht. Mittels eines Bildsensors werden Fahrspurmarkierungen in der Umgebung des Fahrzeugs erfasst, wobei wenigstens ein Sicherheitsabstand von einer Fahrbahnmarkierung vorgegeben ist, bei dessen Unterschreitung eine Fahrerwarnung und/oder ein Eingriff in die Fahrdynamik erfolgt.

Die US 5,765,116 offenbart eine Video-Kamera oder einen gleichwertigen Sensor, der auf einem Fahrzeug montiert ist und verwendet werden kann, um die Fahrbahnmarkierungen auf der Straße (in der Regel die weiß markierten Linien) zu erkennen. Ein damit verbundener Signal-Prozessor schätzt die seitliche Position des Fahrzeugs in Bezug auf die Fahrbahnmarkierungen. Ein Elektromotor, der an die Lenkung gekoppelt ist, wird verwendet, um ein Drehmoment-Input für die Lenkung aufzubringen, die entweder zur Unterstützung oder entgegen dem vom Fahrer aufgebrachten Drehmoment wirkt.

Die EP 1547887 offenbart ein Kfz-Fahrspur-Abweichungspräventions(LDP)-Gerät, das zur Ausführung einer LDP-Kontrolle ausgebildet ist und mittels dem verhindert werden kann, dass ein Fahrzeug von einer Fahrbahn abkommt.

Offenbarung der Erfindung

Es ist die Ausgabe der vorliegenden Erfindung, ein verbessertes Fahrerassistenzsystem mit einem LKS-System und einem LDW-System zu schaffen, das dem Fahrer bei einem drohenden Verlassen der Fahrspur zusätzlich eine Warnung vermittelt, wobei die Kriterien für die Aktivierung bzw. Deaktivierung der Warnung auf möglichst einfache Weise ermittelt werden sollen.
Gelöst wird diese Aufgabe gemäß der Erfindung durch die in dem Patentanspruch 1 angegebenen Merkmale. Dadurch, dass die Kriterien für die Aktivierung bzw. Deaktivierung einer Warnung des LDW-System aus dem LKS-System abgeleitet werden, ergibt sich eine besonders ökonomische Realisierung der den Fahrer unterstützenden Warnfunktion. Durch die Festlegung von Schwellwerten in Verbindung mit einer Kennlinie des LKS-Systems lassen die Schaltpunkte für die Aktivierung bzw. Deaktivierung der Warnung besonders einfach vorgeben und erfassen. Im Interesse einer Optimierung der Warnfunktion kann die Lage der Schwellwerte veränderlich gestaltet werden und insbesondere von Betriebsparametern des Fahrzeugs und/oder der Verkehrslage abhängig gemacht werden.
Weitere Vorteile der Erfindung ergeben sich aus Unteransprüchen und der Beschreibung.

Kurze Beschreibung der Zeichnungen

Die Erfindung wird nachstehend anhand der beigefügten Zeichnungen beispielhaft näher erläutert. Es zeigen:

Fig.1    eine schematische Darstellung einer Lenkung eines Kraftfahrzeugs (Kfz);

Fig.2    eine schematische Blockdarstellung eines Fahrerassistenzsystems;

Fig.3    eine Kennlinie eines LKS-Systems;

Fig.4    eine Kennlinie eines LKS-Systems;

Fig.5    eine Aufsicht auf einen Verkehrsraum mit Darstellung von Fahrzeugpositionen.

Ausführungsform(en) der Erfindung

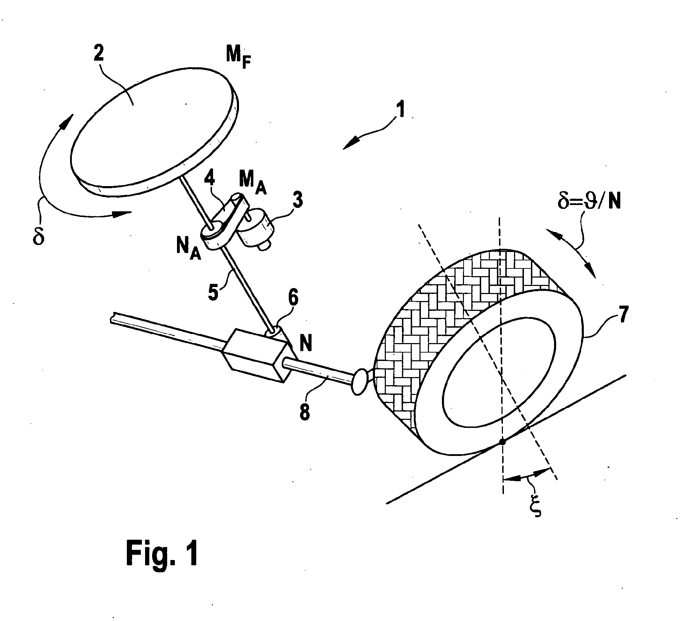

Fig.1 zeigt eine Vorderradlenkung 1 eines Kfz mit einem Lenkrad 2, einer Lenkstange 5, einen Lenkgetriebe 6 mit einem Übersetzungsverhältnis N und einer Spurstange 8, mittels der ein Vorderrad 7 gelenkt wird. Die Lenkung 1 umfasst ferner einen Lenksteller 3, wie z.B. einen Servomotor, mit dem über einen Riementrieb 4 ein Moment MA auf die Lenkstange 5 ausgeübt werden kann. Das Übersetzungsverhältnis ist dabei mit NA bezeichnet.
Die dargestellte Lenkung ist mechanisch identisch aufgebaut wie die meisten herkömmlichen Lenkungen und wird hier im Rahmen eines Querdynamik-Regelsystems dazu genutzt, das Fahrzeug 18 durch Aufbringen eines Führungsmoments MA mittels des Lenkstellers 3 in seiner Fahrspur 20 zu halten.

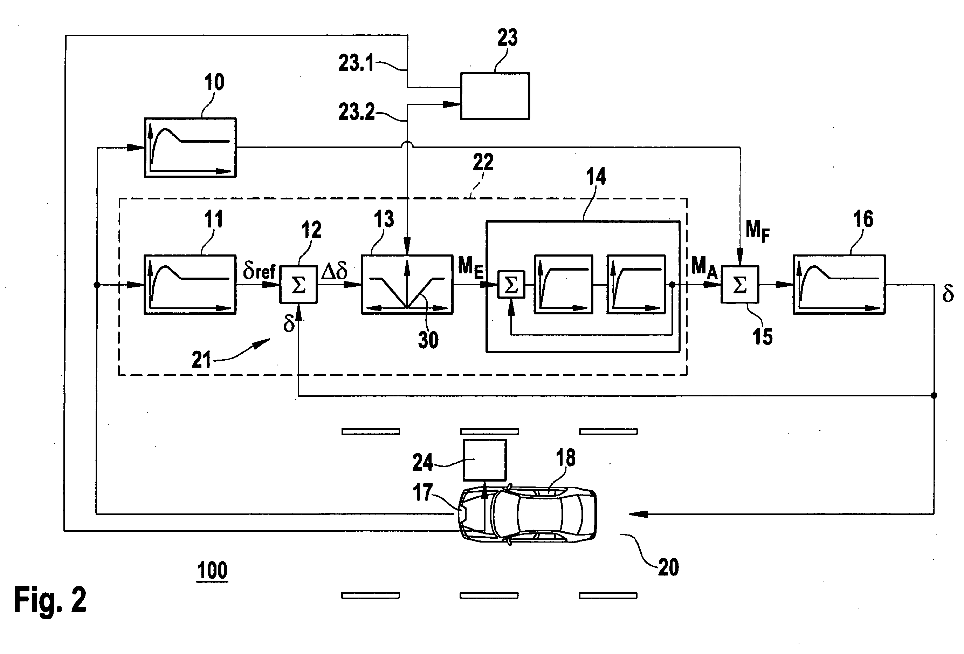

Figur 2 zeigt einen Überblick über das Fahrerassistenzsystem in Gestalt eines Blockdiagramms. Das Querdynamikregelsystem umfasst an dem Fahrzeug 18 angeordnete Sensorik 17 zur Fahrspurerkennung, wie z.B. ein Videosystem, mittels der die Ablage und Orientierung des Fahrzeugs 18 bezüglich der Fahrspur 20, sowie die Fahrspurkrümmung ermittelt werden können. Zur Fahrspurerkennung werden üblicherweise Videosysteme mit einer Videokamera und einer speziellen Bildverarbeitungssoftware eingesetzt, die aus den Bilddaten die gewünschten geometrischen Daten ermittelt.
Die geometrischen Daten, nämlich die Ablage, Orientierung und Fahrbahnkrümmung, werden einem mathematischen Referenzmodell 11 zugeführt, das daraus einen Referenzlenkwinkel $delta_{ref}$ berechnet. Dabei ist der Referenzlenkwinkel $delta_{ref}$ derjenige Lenkwinkel, den der Fahrer einschlagen müsste, um das Fahrzeug 18 in der Fahrspur 20 zu halten. Der nachgeordnete Regelkreis 21 dient dazu, die Regeldifferenz ($delta_{ref}$-delta) des Lenkwinkels stabil auszuregeln und somit das Fahrzeug in seiner Spur 20 zu halten.
Der Regelkreis 21 umfasst einen Knoten 12 (Addierknoten), an dem die Regeldifferenz $delta_{ref}$-data der Regelgröße berechnet wird, ein Übertragungsglied 13, das den Regler des Regelkreises bildet, sowie den Lenksteller 3 mit einem Momentenregelkreis 14, der das Stellglied des Regelkreises 21 bildet. Die Elemente 11, 12, 13 und der Momentenregelkreis 14 des Lenkstellers 3 sind üblicherweise als Softwaremodule in einem Steuergerät 22 implementiert.
Das Übertragungsglied 13 ist derart ausgelegt, dass eine Regelabweichung stabil ausgeregelt werden kann. Im dargestellten Beispiel ist das Übertragungsglied 13 als eine Kennlinie mit Proportionalregelverhalten (p-Glied) realisiert.

Das Übertragungsglied 13 erzeugt in Abhängigkeit von der Regelabweichung ein Moment ME, das dem Lenksteller 3 zugeführt wird. Der Lenksteller 3 setzt das Moment ME je nach Regelcharakteristik in ein Führungsmoment MA um, das dann auf die Lenkstange 5 ausgeübt wird. Dieses Moment MA überlagert sich mit dem von dem Fahrer an dem Lenkrad 2 ausgeübten Moment MF (dies ist in Block 15 dargestellt). Das Übertragungsverhalten der Lenkung 1 ist schließlich durch den Block 16 dargestellt.

In Abhängigkeit von der Lenkaktivität des Fahrers (Moment MF), die durch den Block 10 angedeutet ist, und dem Führungsmoment MA stellt sich schließlich ein Lenkwinkel delta an dem Rad 7 ein. Der Lenkwinkel delta wird z.B. sensorisch gemessen und der entsprechende Wert über einen Rückkoppelpfad in den Knoten 12 gekoppelt und zu der Berechnung der neuen Regelabweichung herangebogen.

Für die mathematische Beschreibung des Gesamtsystems lassen sich folgende Gleichungen ansetzen:

Für den Lenkradwinkel $\vartheta$ (der in einem festen Zusammenhang mit dem Lenkwinkel $\delta$ steht) kann unter Berücksichtigung aller an dem Lenksystem 1 angreifenden Drehmomente folgende Beziehung aufgestellt werden:

$$(1) \qquad J_s\ddot{\vartheta} + c_s\dot{\vartheta} = N_A M_A - \frac{\xi K_s c_v}{N}\left(\frac{1}{N}\vartheta - \frac{l_v}{v}\dot{\Psi} - \beta\right) + M_F$$

Dabei sind auf der linken Seite der Gleichung $J_s$ das äquivalente Trägheitsmoment und $c_s$ eine äquivalente Dämpfungskonstante. Der erste Term auf der rechten Seite der Gleichung beschreibt dabei das von dem Lenksteller 3 ausgebrachte Moment $M_A$ mit einem Übersetzungsverhältnis $N_A$, der zweite Term das durch einen Schräglauf der Vorderräder 7 hervorgerufene Drehmoment mit $\xi$ der Spurlänge des Lenksystems, $K_s$ einer Lenkunterstützung der Servolenkung, $C_v$ der Schräglaufsteifigkeit an den Vorderrädern 7, $l_v$ dem Achsabstand der Vorderachse zu dem Fahrzeugschwerpunkt, $d\psi/dt$ der Giergeschwindigkeit und $\beta$ dem Schwimmwinkel. Der dritte Term bezeichnet das von dem Fahrer an dem Lenkrad aufgebrachte Moment $M_F$. Die Giergeschwindigkeit $d\psi/dt$ und der Schwimmwinkel $\beta$ in der Gleichung (1) lassen sich für die stationäre Kurvenfahrt Weise durch folgende Gleichungen ausdrücken:

$$(2) \quad \dot{\Psi}_{st} = \frac{v}{l_v + l_h - mv^2\dfrac{l_v c_v - l_h c_h}{c_v c_h (l_v + l_h)}}\delta = vc_\psi\delta$$

$$(3) \quad \beta_{st} = \frac{l_h - mv^2\dfrac{l_v}{c_h(l_v + l_h)}}{l_v + l_h - mv^2\dfrac{l_v c_v - l_h c_h}{c_v c_h(l_v + l_h)}}\delta = c_\beta\delta$$

Wobei v die Fahrzeuggeschwindigkeit, m die Fahrzeugmasse, $\delta$ der Lenkwinkel, $c_{v,h}$ die Schräglaufsteifigkeiten vorne und hinten, sowie $l_{v,h}$ die Achsabstände von dem Fahrzeugschwerpunkt vorne bzw. hinten bezeichnen. Eingesetzt in die Gleichung (1) folgt daraus:

$$(4) \quad J_s\ddot{\vartheta} + c_s\dot{\vartheta} + \frac{\xi K_s c_v}{N^2}\left(1 - l_v c_\psi - c_\beta\right)\vartheta = N_A M_A + M_F$$

Die Größe Ks beschreibt dabei die Lenkunterstützung der Servolenkung und kann abhängig von dem Unterstützungsgrad Werte zwischen 0 und 1 annehmen. $K_s=0$ steht dabei für eine maximale Servounterstützung und $K_s = 1$ für das Lenken ohne Servounterstützung.

Betrachtet man das Lenkmoment $M_F$ des Fahrers in Gleichung (4) als Störung, dann ergibt sich als Übertragungsfunktion des Lenksystems:

$$(5) \quad G_L(s) = \frac{\vartheta(s)}{M_A(s)} = \frac{N_A}{J_s s^2 + c_s s + c_L}$$

$$(6) \quad \text{mit} \quad c_L = \frac{\xi K_s c_v}{N^2}\left(1 - l_v c_\psi - c_\beta\right)$$

Diese Übertragungsfunktion weist $PT_2$-Verhalten auf.

Für den Momentenregelkreis 14 des Lenkstellers 3 kann z.B. eine Übertragungsfunktion $G_A(S)$ mit $PT_1$-Verhalten angesetzt werden:

$$(7) \quad G_A(s) = \frac{M_A(s)}{M_E(s)} = \frac{1}{T_1 s + 1}$$

Für den offenen Regelkreis ergibt sich somit insgesamt ein

Streckenübertragungsverhalten:

$$(8) \quad G_0(s) = G_A(s)G_L(s) = \frac{N_A}{J_s T_1 s^3 + (T_1 c_s + J_s)s^2 + (T_1 c_L + c_s)s + c_L}$$

Diese Strecke kann nun z.B. mit einem P-Regelglied stabilisiert werden, wenn der Verstärkungsfaktor $k_p$ des Regelglieds in dem Bereich zwischen 0 und $k_{P,max}$ gewählt wird, wobei $k_{P,max}$ von den Parametern in den Gleichungen (5), (6) und (7) abfängt.

In dem dargestellten Ausführungsbeispiel ist das Übertragungsglied 13 mittels einer Kennlinie realisiert, die in Abhängigkeit von der Regelabweichung einen Momentanwert $M_E$ generiert. Die Kennlinie ist dabei so ausgelegt, dass die Regel- bzw. Lenkwinkelabweichung stabil kompensiert werden kann. Die Kennlinie kann z.B. eine Steigung m aufweisen, für die gilt $0 < m < k_{P,max}$.

Das Übertragungsglied 13 hat vorzugsweise nur P- und kein I-Verhalten. Eine durch einen Fahrereingriff an dem Lenkrad verursachte Störung wird dadurch nicht kompensiert, sondern führt zu einer bleibenden Regelabweichung. Ein Übersteuern des Führungsmoments $M_A$ durch den Fahrer bleibt dadurch jederzeit möglich.

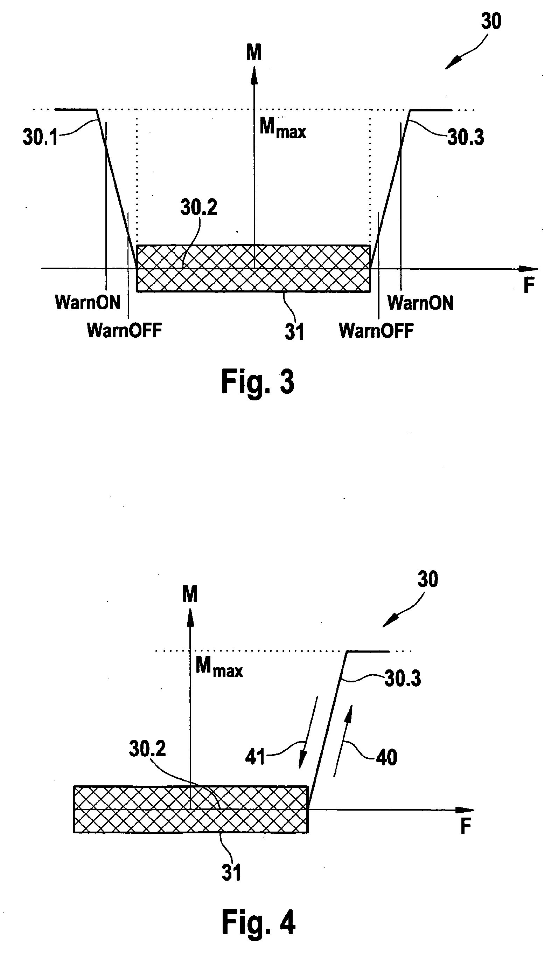

Das Fahrerassistenzsystem umfasst eine Einrichtung, die den Fahrer vor dem Verlassen der Fahrspur warnt. Eine solche Einrichtung oder Funktion wird auch als LDW (Lane Departure Warning) bezeichnet. Besonders vorteilhaft wird die Warnung direkt aus der Kennlinie des Übertragungsglieds 13 abgeleitet, wie im Folgenden unter Bezug auf Figur 3 und Figur 4 dargestellt wird. Figur 3 zeigt nochmals eine schon in der Blockdarstellung der Figur 2 in dem Übertragungsglied 13 angedeutete Kennlinie 30. Die Kennlinie 30 ist in einem rechtwinkligen Koordinatensystem dargestellt. Auf der Abszisse des Koordinatensystems ist eine Abweichung F aufgetragen, die wie folgt definiert ist:

$$(9) \qquad F = \kappa_{Regler} - \kappa_{Lenkrad}$$

$\kappa_{Regler}$ beschreibt die zum Folgen der Fahrspur erforderliche Krümmung, die von einem Querregler berechnet wird, der das Fahrzeug autonom fuhren kann $\kappa_{Lenkrad}$ beschreibt die von dem Fahrer über das Lenkrad eingestellte Krümmung, die das Fahrzeug fahren wird. Auf der Ordinate des Koordinatensystems ist die an dem Lenkrad des Fahrzeugs angreifende Kraft M mit ihrem Maximalwert $M_{max}$ ausgetragen. Die Kennlinie 30 ist in dem dargestellten Ausführungsbeispiel symmetrisch und umfasst drei Abschnitte 30.1, 30.2,30.3. Der auf der Abszisse verlaufenden Abschnitt 30.2 definiert einen Fahrkorridor, in dem sich das Fahrzeug unbeeinflusst durch das LKS-System fortbewegen kann. Der durch den Abschnitt 30.2 definierte Fahrkorridor wird durch wie linear fallenden bzw. linear ansteigenden Abschnitte 30.1 und 30.3 der Kennlinie 30 begrenzet. Durch Wahl der in Figur 3 dargestellten Kennlinie 30 wird die gewünschte Fahrzeugführungscharakteristik erreicht. Durch die Kennlinie 30 wird nur ein vergleichsweise leichtes Aufrichten des in Richtung des Fahrspurverlaufs bewirkt. Da ein Fahrkorridor mit vorgebbarer Breite, entsprechend dem Abschnitt 30.2 der Kennlinie 30, ist, wird durch das LKS-System keine Rückführung auf eine vorgegebene Solltrajektorie , wie zum Beispiel die Mitte der Fahrspur, durchgeführt. Das System führt also keinen Führungseingriff aus, solange der Fahrer in dem zugelassenen Fahrkorridor (Abschnitte 30.2 der Kennlinie 30) fahrt. Aktiv umgelenkt wird das Fahrzeug erst dann, wenn ein Verlassen des Fahrkorridors stattfindet. Der Maximalwert $M_{max}$ wird vorzugsweise so gewählt, dass der maximale Lenkeingriff möglichst sanft erfolgt und fast nicht spürbar ist. Wenn der Fahrer durch einen Lenkeingriff den Fahrkorridor verlässt, steigt der Wert der Abweichung F an. Dann greift das LKS-System des Fahrerassistenzsystems mit dem in der Kennlinie 30 festgelegten Moment ein und dreht das Lenkrad in Richtung des Fahrspurverlaufs zurück. Dieses Rückstellen verringern über den Wert $K_{Lenkrad}$ die Abweichung F und beendet bei dem Eintritt in den Fahrkorridor den Momenteneingriff des Systems. Die Kennlinie 30 ist dabei vorteilhaft so gewählt, dass damit nur eine kurze Ausrichtung des Fahrzeugs erreicht wird. Durch die Verwendung eines Querreglers reagiert das System nicht nur auf das Berühren der Fahrbahnmarkierung sondern ein Systemeingriff beginnt zum Beispiel bei einem steilen Anfahrwinkel des Fahrzeugs auf die Fahrbahnmarkierung schon etwas früher, so dass eine Ausrichtung des Fahrzeugs noch erreicht wird, bevor das Fahrzeug die Fahrspur verlässt. Das Warnsystem (LDW) wird nun zweckmäßig von der Kennlinie 30 gesteuert. Beispielsweise derart, dass dem Fahrer ein Warnsignal übermittelt wird, wenn die Abweichung F einen vorgebbaren Schwellwert WarnON (Figur 3) überschreitet. Die Warnung kann zweckmäßig akustisch und/oder auch haptisch, beispielsweise durch eine dem Lenkrad aufgeprägte Vibration, erfolgen. Durch das Eingreifen des LKS-Systems wird die Fahrtrichtung des Fahrzeugs so korrigiert, dass das von der Fahrspur abgewichene Fahrzeug wieder auf die Fahrspur zurück gelangt und den vorgesehenen Fahrkorridor (siehe Abschnitt 30.2 der Kennlinie 30) erreicht. Die Deaktivierung der Warnung erfolgt vorteilhaft bei dem Wiedereintritt des Fahrzeugs in den Fahrkorridor, etwa bei dem Punkt WarnOFF auf der Kennlinie 30. Zwischen der Aktivierung der Warnung (WarnON) und dem deaktivieren der Warnung (WarnOFF) wird also zweckmäßig eine Hysterese vorgesehen. In dem in Figur 3 dargestellten Ausführungsbeispiel ist die Kennlinie 30 symmetrisch ausgestaltet. Die Aktivierung bzw. Deaktivierung der Warnung erfolgt somit in analoger Weise unabhängig davon ob das Fahrzug nach rechts oder nach links von der Fahrspur bzw. dem Fahrkorridor abweicht. In einer nicht ausdrücklich zeichnerisch dargestellten Ausführungsvariante der Erfindung kann die Kennlinie 30 auch, zwecks besserer Anpassung an die Topographie und/ oder die Verkehrssituation, unsymmetrisch ausgestaltet werden. Beispielsweise umfasse eine Fahrbahn mehrere Fahrspuren bzw. Fahrkorridore. Wenn beispielsweise auf einer links neben dem Fahrkorridor liegenden Fahrspur mit Gegenverkehr zu rechnen ist, während sich auf der rechten Seite des Fahrkorridors 31 eine Standspur befindet, kann verteilhaft für den Abschnitt 30.1 der Kennlinie 30 eine größere Steigung und für den Abschnitt 30.3 der Kennlinie 30 eine geringere Steigung gewählt werden. Durch die größere Steigung des Abschnitts 30.1 der Kennlinie 30, kann, der riskanteren Verkehrslage infolge Gegenverkehr Rechnung tragend, eine frühere Warnung erreicht werden. Alternativ und/oder zusätzlich ist es in weiteren Ausführungsvarianten der Erfindung möglich, die jeweilige Lage Schwellwerte WarnON und WarnOFF variabel zu gestalten. Die Lage kann beispielsweise von einer Betriebskenngröße des Fahrzeugs, wie insbesondere der Geschwindigkeit und/oder von der Verkehrssituation abhängig gemacht werden. In einer weiteren Ausführungsvariante der Erfindung kann alternativ oder zusätzlich auch noch ein Zeitkriterium vorgesehen werden, das die Deaktivierung einer bei dem Punkt WarnON aktivierten Warnung wieder deaktiviert. Dieses Zeitkriterium kann auch variabel werden und beispielsweise von einem Betriebsparameter des Fahrzeugs und/oder von der Verkehrssituation abhängig sein.

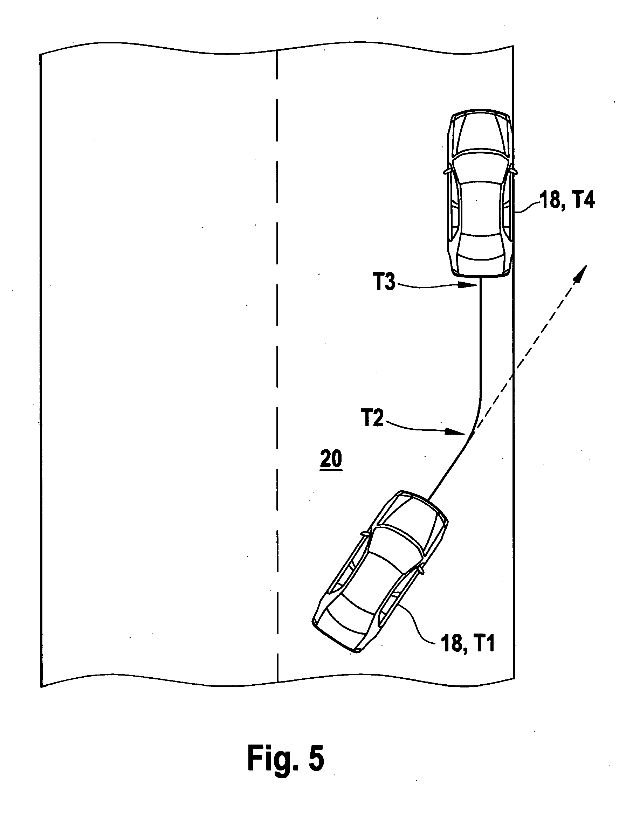

Figur 4 zeigt lediglich die in dem ersten Quadranten des Koordinatensystems F, M liegenden Abschnitte 30.2, 30.3 der Kennlinie 30. Durch Riehtungspfeile 40, 41 angedeutet ist die Verhaltensweise des Fahrzeugs 18. Der Richtungspfeil 40 veranschaulicht, dass das Fahrzeug 18 die Fahrspur und den zulässigen Fahrkorridor 31 verlassen hat. Mit zunehmender Abweichung F (Abszisse) steigt das Moment M entlang der Kennlinie 30 an und nähert sich dem Schwellwert WarnON, bei dessen Überschreiten die Warnung des LDW-Systems aktiviert wird. Der Richtungspfeil 41 repräsentiert das nach Ausrichtung mittels des LKS-Systems auf den angestammten Fahrkorridor 31 zurückkehrende Fahrzeug 18. Bei Unterschreiten des Schwellwerts WarnOFF wird die Warnung des LDW-Systems deaktiviert. Figur 5 erläutert diesen Vorgang nochmals durch eine Aufsicht auf das Fahrzeug 18, das sich auf einer Fahrspur 20 fortbewegt. Zum Zeitpunkt T1 droht das Fahrzeug 18 die Fahrspur 20 zu verlassen, Zum Zeitpunkt T2 erfolgt ein Eingriff des LKS-Systems, mit dem Ziel einer Rückführung des Fahrzeugs 18 auf die Fahrspur 20. Zeitgleich kann eine Warnung des LDW-Systems aktiviert werden. Zum Zeitpunkt T3 endet der Eingriff des LKS-Systems. Wiederum zeitgleich kann auch die Warnung des LDW-Systems desaktiviert werden. Zum Zeitpunkt T4 hat das Fahrzeug 18 wieder seinen Fahrkorridor 31 erreicht.

Das Fahrerassistenzsystem 100 umfasst ein Funktionsmodul 23, das über eine Verbindungsleitung 23.2 mit Übertragungsglied 13 und über eine Verbindungsleitung 23.1 mit einer Warneinrichtung 24 des LDW-Systems des Fahrzeugs 18 verbunden ist. Das Funktionsmodus 23 überprüft, ob die Schwellwerte WarnON, WarnOFF erreicht sind und steuert, in Abhängigkeit davon, die Warneinrichtung 24. Weiterhin kann, mit Hilfe des Funktionsmoduls 23, die Lage der Schwellwerte WarnON, WarnOFF verändert werden.

## Patentansprüche

1. Fahrerassistenzsystem (100) zum Halten eines Fahrzeugs (18) in seiner Fahrspur (20), umfassend ein Lane-Departure-Warning-System, welches den Fahrer bei Verlassen oder drohendem Verlassen der Fahrspur warnt, mit einem Regler zur Ansteuerung eines Lenkstellers, der ein Übertragungsglied (13) umfasst, wobei das Übertragungsglied (13) wenigstens eine Kennlinie (30) ist, wobei die Kennlinie (30) einen Zusammenhang zwischen einer auf einer Abszisse aufgetragenen Abweichung einer zum Folgen der Fahrspur erforderlichen Krümmung gegenüber einer über das Lenkrad eingestellten Krümmung und einer auf einer Ordinate aufgetragenen an dem Lenkrad des Fahrzeugs angreifenden Kraft darstellt, wobei die Kennlinie (30) im Wesentlichen die Gestalt eines Trogs hat, das heißt einen ersten parallel zu der Abszisse verlaufenden Abschnitt (30.2) aufweist, sowie zwei weitere Abschnitte (30.1, 30.3) aufweist, die sich an den ersten parallel zu der Abszisse verlaufenden Abschnitt (30.2) anschließen und eine von Null abweichende Steigung haben, **dadurch gekennzeichnet, dass** bei einem Überschreiten der Abweichung (F) über einen vorgebbaren Schwellwert (WarnON) eine Aktivierung einer Warnung des Lane-Departure-Warning-Systems erfolgt und bei einem Unterschreiten der Abweichung (F) unter einen Sehwellwert (WarnOFF) aus der Kennlinie (30)eine Deaktivierung der Warnung des Lane-Departure-Warning-Systems erfolgt.

2. Fahrerassistenzsystem nach einem der vorhergehenden Ansprüche, **dadurch gekennzeichnet, dass** zwischen den Schwellwerten (WarnON, WarnOFF) eine Hysterese vorgesehen ist.

3. Fahrerassistenzsystem nach einem der vorhergehenden Ansprüche, **dadurch gekennzeichnet, dass** die Lage der Schwellwerte (WarnON, WarnOFF) veränderbar ist und insbesondere von einem Betriebsparameter des Fahrzeugs (18) abhängt.

4. Fahrerassistenzsystem nach einem der vorhergehenden Ansprüche, **dadurch gekennzeichnet, dass** die Lage der Schwellwerte (WarnON, WarnOFF) von der Geschwindigkeit des Fahrzeugs (18) abhängig ist.

5. Fahrerassistenzsystem nach einem der vorhergehenden Ansprüche, **dadurch gekennzeichnet, dass** die Lage der Schwellwerte (WarnON, WarnOFF) von der Verkehrslage abhängig ist.

6. Fahrerassistenzsystem einem der vorhergehenden Ansprüche, **dadurch gekennzeichnet, dass** für die Deaktivierung der Warnung ein Zeitkriterium vorgesehen ist.

7. Fahrerassistenzsystem nach einem der vorhergehenden Ansprüche, **dadurch gekennzeichnet, dass** die Kennlinie (30) symmetrisch ist.

8. Fahrerassistenzsystem nach einem der vorhergehenden Ansprüche, **dadurch gekennzeichnet, dass** die Kennlinie (30) unsymmetrisch ist.

## Claims

1. Driver assistance system (100) for keeping a vehicle (18) in its lane (20), comprising a lane departure warning system which warns the driver when he leaves or threatens to leave the lane, having a controller for actuating a steering actuator which comprises a transmission element (13), wherein the transmission element (13) is at least one characteristic curve (30), wherein the characteristic curve (30) represents a relationship between a deviation, plotted on an abscissa, of a curvature necessary for following the lane compared to a curvature which is set by means of the steering wheel, and a force which is plotted on an ordinate and acts on the steering wheel of the vehicle, wherein the characteristic curve (30) is essentially in the form of a trough, that is to say has a first section (30.2) running parallel to the abscissa and two further sections (30.1, 30.3) which adjoin the first section (30.2) running parallel to the abscissa, and have a gradient which differs from zero, **characterized in that** when the deviation (F) exceeds a predefinable threshold value (WarnON), a warning of the lane departure warning system is activated, and when the deviation (F) drops below a threshold value (WarnOFF) from the characteristic curve (30), the warning of the lane departure warning system is deactivated.

2. Driver assistance system according to the preceding claim, **characterized in that** a hysteresis is provided between the threshold values (WarnON, WarnOFF).

3. Driver assistance system according to either of the preceding claims, **characterized in that** the position of the threshold values (WarnON, WarnOFF) can be varied, and in particular depends on an operating parameter of the vehicle (18).

4. Driver assistance system according to one of the preceding claims, **characterized in that** the position of the threshold values (WarnON, WarnOFF) is dependent on the speed of the vehicle (18).

5. Driver assistance system according to one of the preceding claims, **characterized in that** the position of the threshold values (WarnON, WarnOFF) is dependent on the traffic situation.

6. Driver assistance system according to one of the preceding claims, **characterized in that** a time criterion is provided for the deactivation of the warning.

7. Driver assistance system according to one of the preceding claims, **characterized in that** the characteristic curve (30) is symmetrical.

8. Driver assistance system according to one of the preceding claims, **characterized in that** the characteristic curve (30) is asymmetrical.

**Revendications**

1. Système (100) d'assistance au conducteur destiné à maintenir un véhicule (18) dans sa bande de circulation (20), comprenant
un système d'avertissement de sortie de bande de circulation ("Lane Departure Warning System") qui avertit le conducteur qu'il quitte ou menace de quitter la bande de circulation,
un régulateur de commande d'un organe d'ajustement de direction qui comprend un organe de transmission (13), l'organe de transmission (13) étant au moins une ligne caractéristique (30),
la ligne caractéristique (30) représentant une relation entre un écart, reporté en abscisses, de la courbe nécessaire pour suivre la bande de circulation et une courbe établie par le volant et la force, reportée en ordonnées, qui doit agir sur le volant du véhicule,
la ligne caractéristique (30) ayant essentiellement la forme d'une cuvette, c'est-à-dire présentant une première partie (30.2) qui s'étend parallèlement aux abscisses ainsi que deux autres parties (30.1, 30.3) qui se raccordent à la première partie (30.2) qui s'étend parallèlement aux abscisses et dont la pente est différente de zéro,
**caractérisé en ce que**
un avertissement du système d'avertissement de sortie de bande de circulation est activé au cas où l'écart (F) augmente au-delà d'une valeur de seuil prédéterminée (WarnON) et
**en ce que** l'avertissement du système d'avertissement de sortie de bande de circulation est désactivé au cas où l'écart (F) par rapport à la ligne caractéristique (30) n'atteint pas une valeur de seuil (WarnOFF).

2. Système d'assistance au conducteur selon la revendication précédente, **caractérisé en ce qu'**une hystérèse est prévue entre les valeurs de seuil (WarnON, WarnOFF).

3. Système d'assistance au conducteur selon l'une des revendications précédentes, **caractérisé en ce que** la position des valeurs de seuil (WarnON, WarnOFF) est modifiable et en particulier dépend d'un paramètre de fonctionnement du véhicule (18).

4. Système d'assistance au conducteur selon l'une des revendications précédentes, **caractérisé en ce que** la position des valeurs de seuil (WarnON, WarnOFF) dépend de la vitesse du véhicule (18).

5. Système d'assistance au conducteur selon l'une des revendications précédentes, **caractérisé en ce que** la position des valeurs de seuil (WarnON, WarnOFF) dépend de l'état du trafic.

6. Système d'assistance au conducteur selon l'une des revendications précédentes, **caractérisé en ce qu'**un critère temporel est prévu pour la désactivation de l'avertissement.

7. Système d'assistance au conducteur selon l'une des revendications précédentes, **caractérisé en ce que** la ligne caractéristique (30) est symétrique.

8. Système d'assistance au conducteur selon l'une des revendications précédentes, **caractérisé en ce que** la ligne caractéristique (30) est asymétrique.

**Fig. 1**

Fig. 2

30

M

M$_{max}$

30.1

30.3

30.2

F

WarnON

WarnOFF

31

WarnON

WarnOFF

**Fig. 3**

30

M

M$_{max}$

30.3

30.2

41

40

F

31

**Fig. 4**

**18, T4**

**T3**

**T2**

**20**

**18, T1**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004055064
- EP 1538019 A
- WO 2006037445 A
- US 5765116 A
- EP 1547887 A

**In der Beschreibung aufgeführte Nicht-Patentliteratur**

- Driver Assistance Systems for Lateral and Longitudinal Vehicle Guidance-Heading Control and Active Cruise Support. *Druckschriften Naab, Reichhart*
- **Shimakage ; Kawazoe ; Sadano ; Murakami.** Design of Lane-Keeping Control with Steering Torque Input for a Lene-Keeping Support System. *SAE Technical Papers 2001-01-0480*